(19) **Europäisches Patentamt**

**European Patent Office**

**Office européen des brevets**

(11) **EP 0 829 734 B1**

(12) **EUROPÄISCHE PATENTSCHRIFT**

(45) Veröffentlichungstag und Bekanntmachung des Hinweises auf die Patenterteilung:
**27.10.2004 Patentblatt 2004/44**

(51) Int Cl.7: **G01S 7/526**, G01F 1/66, G01P 5/00

(21) Anmeldenummer: **97114393.8**

(22) Anmeldetag: **20.08.1997**

(54) **Verfahren und Einrichtung zur Messung der Laufzeitdifferenz eines elektrischen, elektromagnetischen oder akustischen Signals**

Method and device for measuring the difference in time of travel of an electrical, electromagnetic or acoustic signal

Méthode et dispositf de mesure de la différence du temps de parcours d'un signal électrique, électromagnétique ou acoustique

(84) Benannte Vertragsstaaten:
**AT CH DE DK ES FR GB IT LI NL**

(30) Priorität: **11.09.1996 DE 19636945**

(43) Veröffentlichungstag der Anmeldung:
**18.03.1998 Patentblatt 1998/12**

(73) Patentinhaber: **SIEMENS AKTIENGESELLSCHAFT**
**80333 München (DE)**

(72) Erfinder: **Kroemer, Nils**
**09337 Hohenstein-Ernstthal (DE)**

(56) Entgegenhaltungen:
NL-A- 7 801 401          US-A- 4 028 938
US-A- 5 012 449          US-A- 5 639 971

## Beschreibung

Die Erfindung betrifft ein Verfahren und eine Einrichtung zur Messung der Laufzeitdifferenz akustischer Signale nach dem Oberbegriff des Anspruchs 1 bzw. nach dem Oberbegriff des Anspruchs 11.

Aus der EP-PS 0 452 531 sind ein derartiges Verfahren und eine derartige Meßeinrichtung bekannt. Die Laufzeitmessung beispielsweise eines Ultraschallsignals beruht darauf, daß von einem Sendewandler ein pulsförmiges Schallsignal in das Meßmedium eingekoppelt und nach dem Durchlaufen der Meßstrecke von einem Empfangswandler detektiert wird. Die Schallaufzeit ist die Zeitdifferenz zwischen dem Sendevorgang und dem Eintreffen des Ultraschallsignals am Empfangsort. Bei einer Schallreflexion wird das gesendete Schallsignal an einer Grenzschicht zwischen dem Meßmedium und einem angrenzenden Medium reflektiert, bevor es zum Empfangswandler gelangt. In diesem Fall kann auch ein einziger Schallwandler wechselseitig als Sende- und Empfangswandler betrieben werden.

Für die Bestimmung der Laufzeit ist in der obengenannten Druckschrift das Puls-Front-Verfahren beschrieben, das darauf beruht, daß die Impulsfront des analogen Empfangssignals mittels eines Komparators erfaßt und ein Signalnulldurchgang mit Hilfe eines zweiten Komparators detektiert wird. Ein mit dem Sendevorgang gestarteter Laufzeitzähler wird bei Ansprechen dieses Nulldurchgangskomparators gestoppt. Damit ist eine von der Empfangssignalamplitude nahezu unabhängige Laufzeitmessung möglich.

Die Auswertung der Pulsfront wird erschwert, wenn sich die Form des Empfangssignals, insbesondere das Einschwingverhalten, gegenüber einem Referenzzustand verändert. Ursache kann z. B. eine erhöhte Schallausbreitungsdämpfung des aktuellen Meßmediums oder eine vom Referenzmedium abweichende Schallgeschwindigkeit sein. Durch derartige Einflüsse kann die Pulsfront stark verformt werden. Da die Pulsfront durch eine Gruppe ansteigender Schwingungen repräsentiert wird, ist nicht immer gewährleistet, daß die für die Messung gewünschte Halbwelle sicher detektiert werden kann.

Bei der Ultraschall-Durchflußmessung nach dem Laufzeit-Differenzprinzip ergibt sich der Volumenstrom Q aus den beiden Schallaufzeiten t1 der Messung "stromaufwärts" und t2 der Messung "stromabwärts" nach folgender Beziehung:

$$Q = K \cdot \frac{t1 - t2}{t1 \cdot t2},$$

wobei K eine im wesentlichen von der Geometrie des Meßaufbaus abhängige Konstante ist. Die Laufzeitdifferenz t1 - t2 ist meist sehr klein gegenüber den absoluten Laufzeitwerten t1 bzw. t2. Ändert sich die Signalform durch veränderte Schallausbreitungsbedingungen, so kann es bei fest eingestelltem Pegel des Empfangssignalkomparators vorkommen, daß in den beiden Signallaufrichtungen verschiedene Schwingungen des Empfangssignals detektiert werden. Häufig weisen nämlich die in den beiden Signallaufrichtungen empfangenen Signale vergleichsweise geringe, für die Detektion einer Halbwelle aber signifikante, von der Fließgeschwindigkeit abhängige Unterschiede in ihrem Einschwingverhalten auf. Werden verschiedene Schwingungen detektiert, so wird die Laufzeitdifferenz zumindest um etwa eine Periodendauer T der Schwingungen falsch gemessen. Dadurch wird ein sehr großer Meßfehler verursacht, da die maximale Laufzeitdifferenz bei Ultraschall-Durchflußmessern üblicherweise nur eine bis zwei Perioden der Ultraschallschwingung beträgt.

Der Erfindung liegt die Aufgabe zugrunde, ein Verfahren und eine Einrichtung zur Messung der Laufzeitdifferenz akustischer Signale zu schaffen, welche bei Laufzeitmessungen mit einander entgegengesetzten Signallaufrichtungen die Sicherheit einer Detektion derselben, zumindest jedoch einer bekannten Halbwelle des Empfangssignals wesentlich verbessern.

Zur Lösung dieser Aufgabe weist das neue Verfahren der eingangs genannten Art die im kennzeichnenden Teil des Anspruchs 1 und die neue Einrichtung die im kennzeichnenden Teil des Anspruchs 11 genannten Merkmale auf. In den abhängigen Ansprüchen sind vorteilhafte Weiterbildungen der Erfindung angegeben.

Die Erfindung hat den Vorteil, daß eine automatische Nachführung der Schwellenspannung des Empfangssignalkomparators ermöglicht wird. Das führt zu einer signifikant erhöhten Meßsicherheit bei veränderlichen Meßbedingungen, wie sie bei der Ultraschall-Durchflußmessung nach dem Laufzeit-Differenzprinzip mit wechselnden Meßmedien oder sich ändernden Durchflußgeschwindigkeiten vorkommen. Die Nachführung der Schwellenspannung wird in Abhängigkeit des Ergebnisses einer einfachen Plausibilitätsprüfung vorgenommen und kann somit während des normalen Meßbetriebs erfolgen. Die verbesserte Meßgenauigkeit muß daher nicht mit einer Verringerung der Meßrate erkauft werden. Vorteilhaft ist zudem, daß die Erfindung praktisch ohne zusätzlichen Schaltungsaufwand realisiert werden kann, wenn eine Meßeinrichtung mit einem Mikroprozessor zur Ablaufsteuerung versehen ist. Eine Überprüfung und eventuelle Nachführung des Vorzugswertes kann dann auf der vorhandenen Hardware durch Laden eines geeigneten Betriebsprogramms implementiert werden. Ebenso ist eine Realisierung einer entsprechenden Ablaufsteuerung durch Implementierung eines Hardware-Steuerwerks möglich.

Anhand der Zeichnungen, in denen Ausführungsbeispiele der Erfindung dargestellt sind, werden im folgenden die Erfindung sowie Ausgestaltungen und Vorteile näher erläutert.

Es zeigen:

Figur 1 ein Prinzipschaltbild einer Einrichtung zur Messung der Laufzeitdifferenz,

Figur 2 ein Zeitdiagramm zur Erläuterung einer Laufzeitmessung,

Figur 3 Diagramme zur Erläuterung einer Möglichkeit zur Vorgabe eines Vorzugswerts,

Figur 4 ein Beispiel einer Plausibilitätsprüfung und

Figur 5 einen Ablauf der Überprüfung eines Vorzugswertes in einem zyklischen Betrieb.

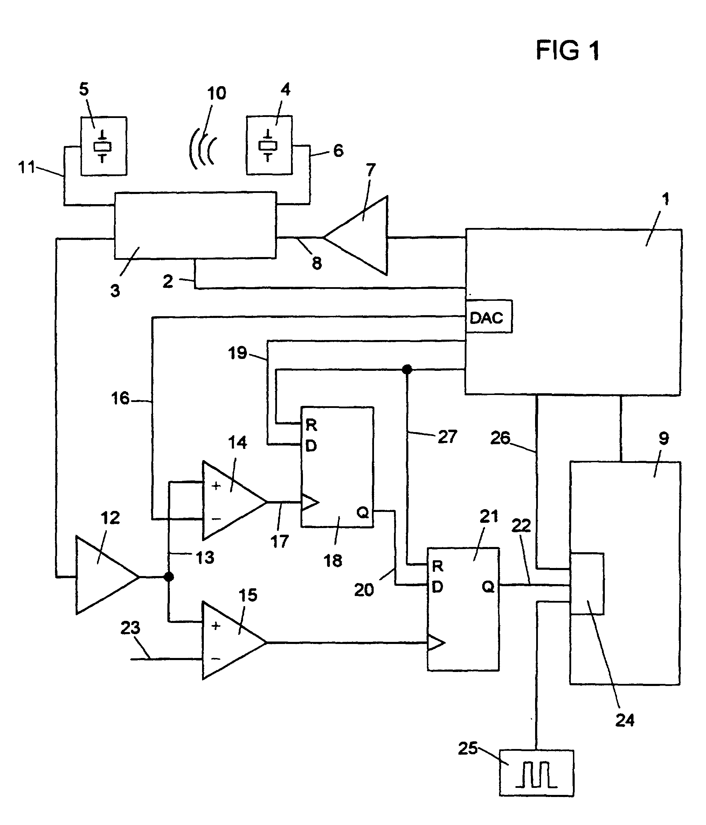

Gemäß Figur 1 wird von einem Mikrocontroller 1, welcher sämtliche Steuer- und Auswertefunktionen übernimmt, ein binäres Steuersignal 2 an einen Kommutator 3 zur Einstellung der Betriebsart der Meßeinrichtung ausgegeben. Durch den Kommutator 3 können zwei Ultraschallwandler 4 und 5 wechselweise als Sender bzw. als Empfänger betrieben werden. Zu dem in Figur 1 dargestellten Zeitpunkt arbeitet der Wandler 4 als Sender, der Wandler 5 als Empfänger. Zur Laufzeitmessung wird durch den Mikrocontroller 1 auf einer Leitung 6 über einen Sendeverstärker 7 und den Kommutator 3 ein pulsförmiges Signal zur Anregung des Sendewandlers 4 erzeugt. Gleichzeitig wird ein Laufzeitzähler 9 zur Messung der Laufzeit eines Ultraschallsignals 10 gestartet. Das in ein Meßmedium abgestrahlte Ultraschallsignal 10 gelangt nach dem Durchlaufen einer Meßstrecke zu dem Empfangswandler 5 und wird dort in ein elektrisches Signal auf einer Leitung 11 umgewandelt. Mit einem Empfangsverstärker 12 wird dieses elektrische Signal verstärkt und als Empfangssignal auf einer Leitung 13 gleichzeitig einem ersten Komparator 14 und einem zweiten Komparator 15 zugeführt. Im ersten Komparator 14 wird das Empfangssignal mit einer ersten Schwellenspannung auf einer Leitung 16 verglichen, die im Mikrocontroller 1 durch einen Digital-Analog-Wandler DAC erzeugt wird. Der erste Komparator 14 liefert ein positives Ausgangssignal auf einer Leitung 17, wenn das Empfangssignal größer als die Schwellenspannung ist. Die erste Schwellenspannung ist so eingestellt, daß sie außerhalb des Rauschens auf der Leitung 13 liegt und daß durch den ersten Komparator 14 das Eintreffen einer Wellengruppe beim Empfangswandler 5 in gewünschter Weise angezeigt wird. Darauf soll später noch genauer eingegangen werden. Überschreitet das Empfangssignal auf der Leitung 13 die erste Schwellenspannung, so führt dies zu einer positiven Flanke auf der Leitung 17, die ein Schalten eines ersten D-Flip-Flops 18 bewirkt, sofern das Ereignis innerhalb eines Meßfensters eintritt, das der Mikrocontroller 1 durch einen High-Pegel auf einer Leitung 19 vorgibt. Der Q-Ausgang des ersten D-Flip-Flops 18 ist über eine Leitung 20 mit dem Dateneingang eines zweiten D-Flip-Flops 21 verbunden. Durch einen High-Pegel auf der Leitung 20 wird das zweite D-Flip-Flop 21 zur Erzeugung eines Stoppsignals auf einer Leitung 22 freigegeben. Der zweite Komparator 15 wird auf einer Leitung 23 mit einer zweiten Schwellenspannung versorgt, die etwa dem Bezugspotential des Empfangssignals entspricht. Der zweite Komparator 15 schaltet somit immer in der Nähe der Nulldurchgänge des Empfangssignals. Den beiden Komparatoren 14 und 15 nachgeschaltete steuerbare Inverter, die zur Vorgabe der Polarität bei der Detektion von Halbwellen und Signalnulldurchgängen dienen, sind der Übersichtlichkeit wegen nicht dargestellt und können bei der Verdeutlichung des Prinzips außer acht gelassen werden. Der Ausgang des zweiten Komparators 15 ist mit einem Takteingang des zweiten D-Flip-Flops 21 verbunden. Der Q-Ausgang des zweiten D-Flip-Flops 21 wechselt somit seinen Zustand mit der ersten steigenden Flanke an seinem Takteingang, nachdem das Eintreffen einer Wellengruppe durch den ersten Komparator 14 detektiert wurde. Mit einem High-Pegel auf der Leitung 22 wird ein zuvor offenes Tor 24 des Laufzeitzählers 9 verriegelt, so daß weitere Impulse eines Quarzoszillators 25 nicht mehr gezählt werden. Die Frequenz des Quarzoszillators 25 liegt im Bereich einiger Megahertz. Der Startzeitpunkt einer Laufzeitmessung wird dem Laufzeitzähler 9 vom Mikrocontroller 1 durch eine ebenfalls auf das Tor 24 geführte Leitung 26 angezeigt. Der Inhalt des Laufzeitzählers wird von dem Mikrocontroller 1 übernommen und weiterverarbeitet. Nach jeder Laufzeitmessung werden das erste D-Flip-Flop 18 und das zweite D-Flip-Flop 21 durch einen Reset-Impuls auf einer Leitung 27 zurückgesetzt. Zur Messung einer Laufzeitdifferenz bei einem Ultraschall-Durchflußmesser schaltet der Mikrocontroller 1 den Kommutator 3 um, und es wird in ähnlicher Weise eine Laufzeitmessung in der entgegengesetzten Signallaufrichtung durchgeführt. Durch einfache Berechnung wird die Laufzeitdifferenz gewonnen.

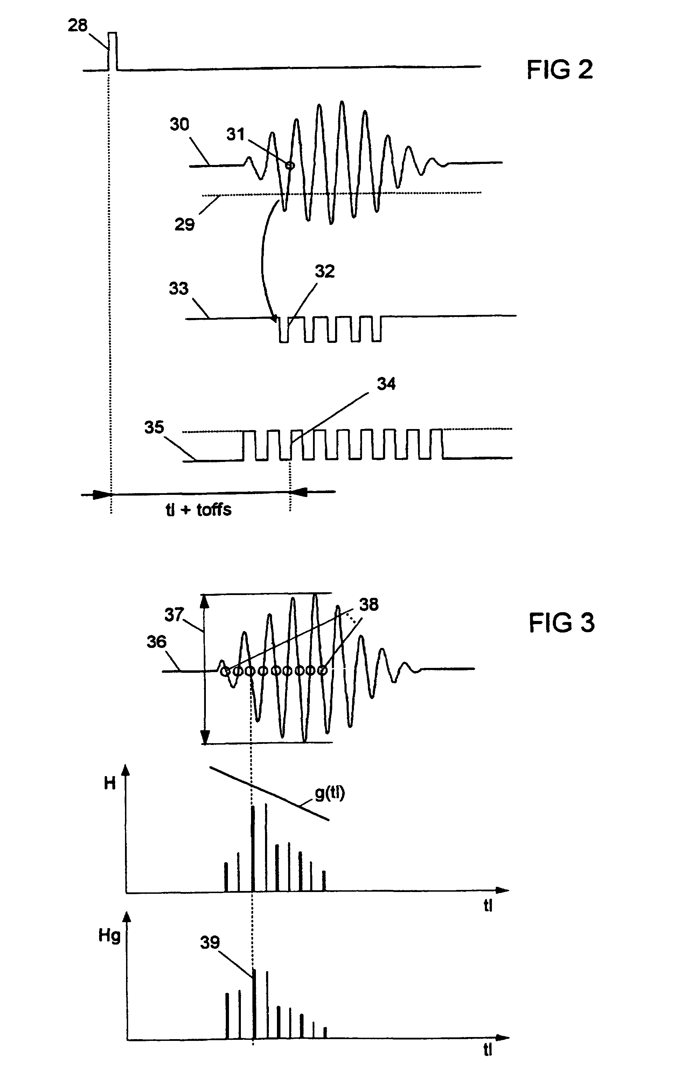

Figur 2 zeigt beispielhaft ein Zeitdiagramm zur Verdeutlichung der Arbeitsweise der Schaltung nach Figur 1. Eingeleitet wird eine Laufzeitmessung durch einen Impuls 28, der beispielsweise über die Leitung 6 (Figur 1) dem Wandler 4 zugeführt wird. Die erste Schwellenspannung, deren Größe in Figur 2 mit einer durchbrochenen Linie 29 angedeutet ist, ist so eingestellt, daß die zweite negative Halbwelle einer Gruppe von Schwingungen eines Empfangssignals 30 detektiert wird. Der Laufzeitzähler 9 (Figur 1) wird mit dem auf die detektierte Halbwelle folgenden Nulldurchgang, in Figur 2 durch einen Kreis 31 markiert, gestoppt. Dazu werden mit einer steigenden Flanke 32 eines Ausgangssignals 33 des ersten Komparators 14 auf der Leitung 17 (Figur 1) ein Signal zur Freigabe des Stoppeingangs am Laufzeitzähler 9 auf der Leitung 20 erzeugt und mit einer steigenden Flanke 34 eines Ausgangssignals 35 des zweiten Komparators 15 (Figur 1) der Laufzeitzähler 9 gestoppt. Eine auf diese Weise gemessene Zeit tl + toffs wird um einen schaltungs- und sensorabhängigen Zeitoffset toffs rechnerisch reduziert, um die eigentliche Laufzeit tl des Signals zu erhalten.

Bei einer Initialisierung und in bestimmten, größeren Zeitabständen während des späteren Meßbetriebs wird ein Wert der ersten Schwellenspannung ermittelt, mit welchem stets eine Schwingung des Empfangssignals selektiert wird, welche sich in ihrer Amplitude von der vorangegangenen Schwingung deutlich unterscheidet und welche zugleich "weit vorn" in der Gruppe ansteigender und wieder abfallender Schwingungen liegt. Ein hierzu geeignetes Verfahren soll anhand Figur 3 erläutert werden. Gesteuert durch den Mikrocontroller 1 (Figur 1) wird die erste Schwellenspannung über den gesamten oder einen Teilbereich des vom Empfangssignal überstrichenen Wertebereichs variiert und dabei jeweils die Laufzeit gemessen. Der Wertebereich eines Empfangssignals 36 ist in Figur 3 durch einen Maßpfeil 37, die dabei selektierten Nulldurchgänge durch Kreise 38 angedeutet. Erfolgt die Variation in äquidistanten Schritten, so ergeben sich entsprechend der Amplitudendifferenzen zwischen jeweils zwei aufeinanderfolgenden Signalschwingungen unterschiedliche Häufigkeiten der gemessenen, um jeweils eine Periodendauer veränderten Laufzeiten. Die Häufigkeiten für positive erste Schwellenspannungen und negative Signalnulldurchgänge sind im mittleren Diagramm in Figur 3 mit dickeren Balken, die mit negativen ersten Schwellenspannungen und positiven Signalnulldurchgängen gewonnenen Häufigkeiten mit dünneren Balken qualitativ eingezeichnet. An der Ordinate ist die Häufigkeitsverteilung H, an der Abszisse die Laufzeit t1 aufgetragen. Um sicherzustellen, daß die Schwingung detektiert wird, welche ein Optimum von Häufigkeit des jeweiligen Laufzeitmeßwerts und Ordnung der Nullstelle ergibt, werden die ermittelten Häufigkeiten noch mit einer Bewertungsfunktion g(tl) gewichtet. Die auf diese Weise erhaltenen gewichteten Häufigkeiten sind im unteren Diagramm in Figur 3 eingezeichnet. Eine Halbwelle niedriger Ordnung, d. h. eine "weit vorn" liegende Halbwelle der Schwingungsgruppe, zu wählen, hat den Vorteil, daß parasitäre Schallübertragungswege das Empfangssignal hier kaum verfälschen. In dem gezeigten Beispiel wird schließlich die Signalhalbwelle mit einem Häufigkeitsbalken 39 gewählt und die erste Schwellenspannung vorzugsweise auf die Mitte des Spannungsbereichs gelegt, welcher durch die Amplitudenspitzenwerte der detektierten Halbwelle des Empfangssignals und der vorhergehenden Halbwelle gleicher Polarität begrenzt ist. Mit dem beschriebenen Verfahren wird die Halbwelle selektiert, die ein Optimum an Meßsicherheit bei sehr gutem Signal/Rausch-Abstand ergibt. Die Zeitabstände für eine periodische Selektion einer Halbwelle während des Meßbetriebs können wesentlich größer gewählt werden als die Abstände zwischen den einzelnen Messungen. Das Verhältnis kann z. B. 10000 oder mehr betragen.

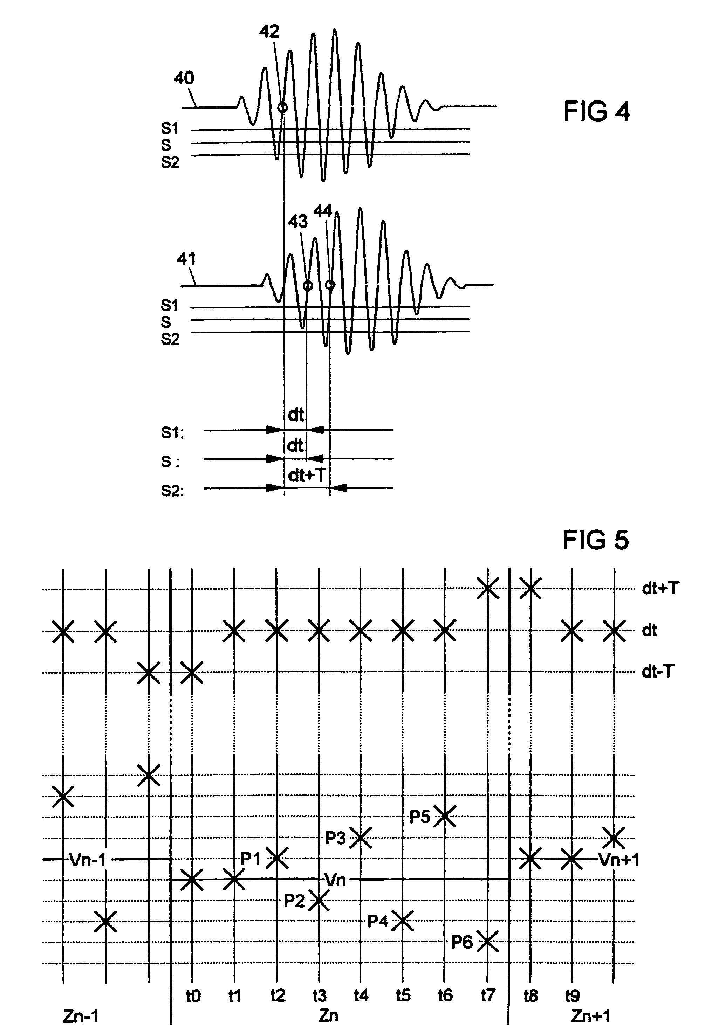

Da sich während des Betriebs aufgrund veränderlicher Meßbedingungen, beispielsweise bei einem Ultraschall-Durchflußmesser wegen sich ändernder Strömungsgeschwindigkeit, die Form des Empfangssignals verändern kann, wird die vorgegebene Lage der ersten Schwellenspannung während des Meßbetriebs einer Überprüfung unterzogen und eventuell nachgeführt. Bei der Ultraschall-Durchflußmessung geschieht dies, indem geprüft wird, ob mit dem vorgegebenen Vorzugswert der ersten Schwellenspannung, der für die beiden Signallaufrichtungen "stromauf" und "stromab" gleich ist, mit hinreichender Plausibilität für beide Laufzeitmessungen einer Differenzmessung kongruente Schwingungen detektiert werden. Eine Möglichkeit zur Plausibilitätsprüfung wird in Figur 4 verdeutlicht. In Figur 4 sind ein Zeitverlauf 40 für eine Messung "stromab" sowie ein Zeitverlauf 41 eines Empfangssignals für eine Messung "stromauf" übereinander gezeichnet. Zur besseren Darstellung der Laufzeitdifferenzen sind die Signalverläufe 40 und 41 bezüglich der Zeitachse derart verschoben, daß ihre Nulldurchgänge bei gleicher Laufzeit vertikal übereinanderliegen würden. In einer von Figur 1 abweichenden Ausführungsform einer Einrichtung zur Laufzeitdifferenzmessung, die mit zwei Empfangsschaltkreisen zur Auswertung von Empfangssignalen beider Wandler versehen ist und bei der die Wandler gleichzeitig ein pulsförmiges Signal aussenden, könnte eine Darstellung der Empfangssignale wie in Figur 4 auch ohne zeitliche Verschiebung gewonnen werden. Zur Überprüfung eines vorgegebenen Vorzugswertes S für die erste Schwellenspannung wird in aufeinanderfolgenden Messungen durch Erhöhen und Erniedrigen des Vorzugswertes um einen vorgegebenen Betrag ein oberer Prüfwert S1 bzw. ein unterer Prüfwert S2 eingestellt. Für alle drei Werte der ersten Schwellenspannung wird bei der Messung "stromab" ein Nulldurchgang 42 zur Laufzeitmessung selektiert, da in jedem Fall dieselbe Halbwelle zum Schalten des ersten Komparators führt. Bei der Messung "stromauf" dagegen wird lediglich für den Vorzugswert S sowie für den oberen Prüfwert S1 eine kongruente Halbwelle detektiert, so daß nur für diese Werte ein kongruenter Nulldurchgang 43 zur Laufzeitmessung erfaßt wird. Der untere Prüfwert S2 wird durch die negative Amplitudenspitze dieser Halbwelle gerade nicht mehr erreicht, mit der Folge, daß für diesen Wert eine Halbwelle detektiert wird, die um eine Schwingungsdauer später eintrifft. Infolgedessen wird für die Laufzeitmessung "stromauf" nun ein Nulldurchgang 44 selektiert. Dies bedeutet, wie es in Figur 4 unten durch Maßpfeile angedeutet ist, daß für den Vorzugswert S und den oberen Prüfwert S1 eine Laufzeitdifferenz dt, dagegen für den unteren Prüfwert S2 eine Laufzeitdifferenz dt+T gemessen wird. Aufgrund der Zusammensetzung dieser drei Meßergebnisse und eventuell auch unter Berücksichtigung früherer Meßergebnisse wird die Messung der Laufzeitdifferenz mit dem unteren Prüfwert S2 als fehlerhaft erkannt und als ungültig verworfen. Als vorteilhaft hat es sich dabei erwiesen, den Betrag, um den die beiden Prüfwerte S1 und S2 vom Vorzugswert S abweichen, als 25 % der Amplitudendifferenz der detektierten Halbwelle und der vorhergehenden Halbwelle des Empfangssignals vorzugeben. Für eine Verschiebung des Vorzugswertes hat sich die folgende Fallunterscheidung bewährt:

a) Wird bei den Prüfwerten S1 und S2 die gleiche Laufzeitdifferenz wie beim Vorzugswert S gemessen, so bleibt der aktuelle Vorzugswert erhalten;

b) wird mit dem aktuell eingestellten Vorzugswert S eine Laufzeitdifferenz gemessen, welche sich um zumindest eine Periodendauer T von der bei unterem Prüfwert S2 sowie bei oberem Prüfwert S1 unterscheidet, so wird der Vorzugswert auf einen der beiden Prüfwerte S1 und S2, vorzugsweise denjenigen, der näher beim Gleichanteil des Empfangssignals liegt, gesetzt, und

c) wird für einen der beiden Prüfwerte, d. h. für den Prüfwert S1 oder den Prüfwert S2, eine Laufzeitdifferenz gemessen, welche sich zumindest um eine Periodendauer T von der beim aktuellen Vorzugswert S und der beim entgegengesetzten Prüfwert S2 bzw. S1 gemessenen Laufzeitdifferenz unterscheidet, so wird der Vorzugswert S so verändert, daß er zwischen dem aktuellen Vorzugswert S und dem entgegengesetzten Prüfwert S2 bzw. S1 liegt.

Alternativ kann im Fall b) auch der neue Vorzugswert nicht auf einen der beiden Prüfwerte S1 oder S2 gesetzt, sondern lediglich in Richtung zu einem der beiden Prüfwerte S1 oder S2 hin verschoben werden. Die Verschiebung erfolgt vorteilhaft in einem Schritt, der wesentlich kleiner ist als der Betrag, um den die beiden Prüfwerte S1 und S2 vom Vorzugswert S abweichen. Dadurch wird erreicht, daß einzelne Fehlmessungen aufgrund von Rauschen des Empfangssignals nicht sofort zu wesentlichen Verschiebungen des Vorzugswertes führen.

Anhand Figur 5 soll eine weitere Möglichkeit zur Erhöhung der Meßsicherheit mit einer Nachführung der ersten Schwellenspannung erläutert werden. In Zyklen Zn-1, Zn und Zn+1 sowie in vorhergehenden und nachfolgenden, in Figur 5 nicht mehr dargestellten Zyklen wird ein Vorzugswert Vn-1, Vn bzw. Vn+1 überprüft und nachgeführt, wie es im folgenden anhand des vollständig eingezeichneten Zyklusses Zn näher erläutert wird. Im oberen Diagramm sind qualitativ die gemessenen Laufzeitdifferenzen, im unteren Diagramm die jeweiligen Werte der ersten Schwellenspannung für die einzelnen Laufzeitmessungen über der Zeit aufgetragen. Die Laufzeitdifferenzen werden jeweils aus zwei aufeinanderfolgenden Messungen der Laufzeit berechnet. Wenn ein Laufzeitmeßwert als ungültig verworfen wurde, werden infolgedessen auch die Werte der Laufzeitdifferenzen, die aus dieser Laufzeit und der vorhergehenden sowie aus dieser und der nachfolgenden Laufzeit berechnet werden, bei der Ausgabe von Meßwerten nicht berücksichtigt. Dadurch werden lediglich Meßwerte, welche die Laufzeitdifferenz dt ergeben, als gültige Meßwerte ausgegeben. Die wechselweise Umkehrung der Signallaufrichtung wird bei der Differenzberechnung durch einfache Vorzeichenumkehr berücksichtigt. Der Zyklus Zn beginnt mit einer Laufzeitmessung zum Zeitpunkt t0, bei welcher die erste Schwellenspannung auf den aktuellen Vorzugswert Vn eingestellt ist. Da bei der vorherigen Laufzeitmessung ein ungültiger Laufzeitmeßwert erhalten wurde, ist auch die berechnete Laufzeitdifferenz, die den Wert dt-T hat, zum Zeitpunkt t0 ungültig. Auf die Laufzeitmessung zum Zeitpunkt t0 folgt zum Zeitpunkt t1 eine weitere Laufzeitmessung mit dem Vorzugswert Vn. Aus diesen beiden Laufzeitmessungen wird nun der gültige Wert der Laufzeitdifferenz dt berechnet. Für die weiteren Laufzeit- und Laufzeitdifferenzmessungen zu den Zeitpunkten t2 ... t7 wird die erste Schwellenspannung auf Prüfwerte P1 ... P6 ober- und unterhalb des Vorzugswertes Vn eingestellt. Der Abstand der Prüfwerte zum Vorzugswert Vn wird schrittweise erhöht, bis beim Prüfwert P6 zum Zeitpunkt t7 eine Laufzeit gemessen wird, die zu einer um die Dauer T einer Schwingung abweichenden Laufzeitdifferenz dt+T führt. Dieser Meßwert wird wieder als ungültig verworfen und der Vorzugswert Vn+1 des nächsten Zyklusses Zn+1 wird um einen Schritt nach oben verschoben, da der Prüfwert P6 mit der fehlerhaften Messung unterhalb des bisherigen Vorzugswertes Vn liegt. Der neue Zyklus Zn+1 beginnt wiederum mit zwei Laufzeitmessungen mit dem neuen Vorzugswert Vn+1 zu den Zeitpunkten t8 und t9, wobei die Berechnung der Laufzeitdifferenz zum Zeitpunkt t8 aufgrund der fehlerhaften Laufzeitmessung zum Zeitpunkt t7 als ungültig verworfen wird. Durch dieses zyklische Überprüfen und Nachführen der Vorzugswerte wird in vorteilhafter Weise erreicht, daß der Vorzugswert immer in der Mitte des Bereichs zwischen der Amplitudenspitze der detektierten Halbwelle und derjenigen der vorhergehenden Halbwelle liegt. Eine derart gewählte Einstellung der ersten Schwellenspannung zeichnet sich durch einen optimalen Störabstand aus. Unter der Voraussetzung, daß bei den Prüfwerten dieselbe Halbwelle detektiert wird, ändert sich die gemessene Laufzeit aufgrund einer Verschiebung der ersten Schwellenspannung nicht. Die Überprüfung der Vorzugswerte kann somit während des Meßbetriebs erfolgen und benötigt keine zusätzliche Zeit, die sich negativ auf die Meßrate auswirken könnte. Eine Implementierung mit einer Einrichtung gemäß Figur 1 ist mit geringem Aufwand verbunden, da, gesteuert durch den Mikrocontroller 1, lediglich die an den Digital-Analog-Umsetzer DAC ausgegebenen Digitalwerte inkrementiert oder dekrementiert werden müssen, um eine schrittweise Veränderung der ersten Schwellenspannung zur Einstellung von Prüfwerten herbeizuführen.

Bei dem anhand von Figur 5 erläuterten Ausführungsbeispiel werden die bei den Prüfwerten P2 ... P6 gemessenen Laufzeitdifferenzen jeweils mit der zuletzt gemessenen und daher lediglich indirekt mit der beim Vorzugswert Vn gemessenen Laufzeitdifferenz verglichen, da zwischen den einzelnen Prüfwerten keine Messung mit dem Vorzugswert Vn erfolgt. Dadurch werden auch bei kleiner Schrittweite der Abstandserhöhung aufeinanderfolgender Prüfwerte eine kurze Zykluszeit und eine schnelle Nachführung des Vorzugswertes erreicht. Zudem können sich die Laufzeitdifferenzen abweichend von dem Verlauf in Figur 5 über einen Zyklus hinweg in kleineren Schritten um insgesamt mehr als eine Schwingungsdauer T verschieben, ohne daß bereits hierdurch eine Veränderung des aktuellen Vorzugswerts herbeigeführt werden würde. Alternativ hierzu kann auch ein direkter Vergleich der bei den Prüfwerten gemessenen Laufzeitdifferenzen mit der beim Vorzugswert gemessenen vorgenommen werden, indem zwischen die Messungen bei den Prüfwerten jeweils eine oder mehrere Messungen mit dem Vorzugswert eingefügt werden. Eine kürzere Zykluszeit kann auch durch Übergehen unkritischer Prüfwerte, die einen geringen Abstand zum Vorzugswert haben, herbeigeführt werden.

**Patentansprüche**

1. Verfahren zur Messung der Laufzeitdifferenz akustischer Signale mit einander entgegengesetzten Signallaufrichtungen zwischen zwei Wandlern (4, 5) eines Durchflußmessers, die in Abstand zueinander angeordnet sind und wechselweise als Sender (4) bzw. als Empfänger (5) betrieben werden, wobei das vom Sender abgestrahlte Signal (10) den Empfänger als über mehrere Schwingungen ansteigende und wieder abfallende Wellengruppe erreicht und das Empfangssignal durch einen ersten Komparator (14) mit einer ersten Schwellenspannung und durch einen zweiten Komparator (15) mit einer nahe seinem Gleichanteil liegenden zweiten Schwellenspannung verglichen wird und wobei eine Laufzeitmessung einer Signallaufrichtung bei einem auf ein Schalten des ersten Komparators folgenden Schalten des zweiten Komparators gestoppt und die Differenz zweier Laufzeitmessungen berechnet wird,
**dadurch gekennzeichnet,**

   - **daß** die erste Schwellenspannung auf zumindest einen ober und/oder unterhalb eines vorgegebenen Vorzugswertes (S) gelegenen Prüfwert (S2) eingestellt wird,
   - **daß** die bei dem Prüfwert (S2) gemessene Laufzeitdifferenz (dt+T) direkt oder indirekt mit derjenigen (dt) bei dem vorgegebenen Vorzugswert (S) verglichen wird und
   - **daß** der vorgegebene Vorzugswert (S) der ersten Schwellenspannung beibehalten wird, wenn bei dem Prüfwert (S2) nahezu dieselbe Laufzeitdifferenz wie beim vorgegebenen Vorzugswert (S) gemessen wird, und ein neuer Vorzugswert für die erste Schwellenspannung vorgegeben wird, wenn die beim vorgegebenen Vorzugswert (S) und beim Prüfwert (S2) gemessenen Laufzeitdifferenzen um etwa die Dauer zumindest einer Schwingung voneinander abweichen.

2. Verfahren nach Anspruch 1, **dadurch gekennzeichnet,**

   - **daß** der neue Vorzugswert gegenüber dem bisher vorgegebenen nach unten verschoben wird, wenn der Prüfwert mit einer etwa um die Dauer einer Schwingung abweichenden Laufzeitdifferenz oberhalb des bisher vorgegebenen Vorzugswertes lag, und nach oben, wenn der Prüfwert unterhalb des bisher vorgegebenen Vorzugswertes lag.

3. Verfahren nach Anspruch 2, **dadurch gekennzeichnet,**

   - **daß** aufgrund von Abweichungen der bei einem Prüfwert und beim Vorzugswert gemessenen Laufzeitdifferenzen vorgenommene Verschiebungen des Vorzugswertes dem Abstand zwischen Prüfwert und Vorzugswert betragsmäßig höchstens gleich sind.

4. Verfahren nach Anspruch 3, **dadurch gekennzeichnet,**

   - **daß** zyklisch Prüfwerte (P1 ... P6) mit wachsendem Abstand zum Vorzugswert (Vn) alternierend ober- und unterhalb von diesem eingestellt werden, bis eine bei einem Prüfwert (P6) gemessene Laufzeitdifferenz (dt+T) etwa um die Dauer (T) zumindest einer Schwingung von derjenigen (dt) bei dem vorhergehenden Prüfwert (P5) oder derjenigen (dt) bei dem bisherigen Vorzugswert (Vn) abweicht und ein neuer Vorzugswert (Vn+1) für einen darauffolgenden Zyklus (Zn+1) vorgegeben wird.

5. Verfahren nach Anspruch 4, **dadurch gekennzeichnet,**

   - **daß** in einem Zyklus (Zn) der Abstand der Prüfwerte (P1 ... P6) zum Vorzugswert (Vn) in äquidistanten Schritten vergrößert wird und
   - **daß** der neue Vorzugswert (Vn+1) aus dem bisherigen (Vn) durch Veränderung um eine Schrittweite gewonnen wird.

6. Verfahren nach Anspruch 1 oder 2, **dadurch gekennzeichnet,**

   - **daß** die erste Schwellenspannung auf einen oberen und einen unteren Prüfwert (S1; S2), die jeweils um einen etwa gleichen Betrag vom vorgegebenen Vorzugswert (S) abweichen, eingestellt wird und
   - **daß** der neue Vorzugswert gegenüber dem bisher vorgegebenen in Richtung zum Wert des Gleichanteils des Empfangssignals hin verschoben wird, wenn die Laufzeitdifferenzen bei den beiden Prüfwerten (S1; S2) etwa um die Dauer (T) zumindest einer Schwingung von derjenigen (dt) bei dem bisherigen Vorzugswert (S) abweichen.

7. Verfahren nach Anspruch 6, **dadurch gekennzeichnet,**

   - **daß** die beiden Prüfwerte (S1; S2) bezogen auf den Gleichanteil des Empfangssignals fünf Viertel bzw. drei Viertel des Vorzugswerts (S) betragen.

8. Verfahren nach Anspruch 6, **dadurch gekennzeichnet,**

   - **daß** die beiden Prüfwerte (S1; S2) um ein Viertel des Abstands zwischen der detektierten und der vorhergehenden Schwingung des Empfangssignals ober- bzw. unterhalb des Vorzugswertes (S) liegen.

9. Verfahren nach einem der vorhergehenden Ansprüche, **dadurch gekennzeichnet,**

   - **daß** in einer Initialisierungsphase das Maximum der Einhüllenden der Schwingungsgruppe ermittelt und der Vorzugswert (S) auf die Hälfte des Maximums gesetzt wird.

10. Verfahren nach einem der Ansprüche 1 bis 8, **dadurch gekennzeichnet,**

    - **daß** in einer Initialisierungsphase eine Reihe von Laufzeitmessungen durchgeführt wird, wobei die erste Schwellenspannung über einen zumindest einige Spitzenwerte der Schwingungen einer Gruppe umfassenden Bereich variiert wird,
    - **daß** der Häufigkeitsverlauf (H) der gemessenen Laufzeiten ermittelt und mit einer Gewichtungsfunktion (g(tl)) bewertet wird, derart, daß Häufigkeiten bei geringeren Laufzeiten gegenüber denen bei höheren verstärkt werden, und
    - **daß** als Vorzugswert der mittlere Wert des Bereichs der ersten Schwellenspannung vorgegeben wird, der die höchste gewichtete Häufigkeit von Laufzeitmeßwerten ergibt.

11. Einrichtung zur Messung der Laufzeitdifferenz akustischer Signale mit einander entgegengesetzten Signallaufrichtungen,

    - mit zwei Wandlern (4, 5) eines Durchflußmessers, die in Abstand zueinander angeordnet sind und wechselweise als Sender bzw. als Empfänger betreibbar sind, wobei das vom Sender (4) abgestrahlte Signal (10) den Empfänger (5) als über mehrere Schwingungen ansteigende und wieder abfallende Wellengruppe erreicht,
    - mit einem ersten Komparator (14) zum Vergleich des Empfangssignals mit einer ersten vorgebbaren Schwellenspannung,
    - mit einem zweiten Komparator (15) zum Vergleich des Empfangssignals mit einer nahe seinem Gleichanteil liegenden zweiten Schwellenspannung,
    - mit Mitteln zur Laufzeitmessung in einer Signallaufrichtung, wobei bei einem auf ein Schalten des ersten Komparators folgenden Schalten des zweiten Komparators die Laufzeitmessung gestoppt wird, und
    - mit Mitteln (1) zur Berechnung der Differenz zweier Laufzeitmessungen,

    **dadurch gekennzeichnet,**

    - **daß** Mittel (1, DAC) vorhanden sind, um die erste Schwellenspannung auf zumindest einen ober- und/oder unterhalb eines vorgegebenen Vorzugswertes (S) gelegenen Prüfwert (S2) einzustellen, die bei dem Prüfwert (S2) gemessene Laufzeitdifferenz (dt+T) direkt oder indirekt mit derjenigen (dt) bei dem vorgegebenen Vorzugswert (S) zu vergleichen und den vorgegebenen Vorzugswert (S) der ersten Schwellenspannung beizubehalten, wenn bei dem Prüfwert (S2) nahezu dieselbe Laufzeitdifferenz wie beim vorgegebenen Vorzugswert (S) gemessen wird, und einen neuen Vorzugswert für die erste Schwellenspannung vorzugeben, wenn die beim vorgegebenen Vorzugswert (S) und beim Prüfwert (S2) gemessenen Laufzeitdifferenzen um etwa die Dauer (T) zumindest einer Schwingung voneinander abweichen.

## Claims

1. Method for measuring the difference in time of travel of audio signals with mutually opposite signal alignments between two transducers (4, 5) of a flow meter, arranged at a distance from one another and operated alternately as a transmitter (4) and as a receiver (5), such that the signal (10) radiated by the transmitter reaches the receiver as a wave group rising and falling again over several oscillations and the received signal is compared by a first comparator (14) with a first threshold voltage and by a second comparator (15) with a second threshold voltage close to its direct component, and such that a time of travel measurement in a signal alignment is stopped when the switching of the first comparator is followed by the switching of the second comparator and the difference between two time of travel measurements is calculated, **characterised in that**

- the first threshold voltage is set to at least one test value (S2) lying above and/or below a specified preferred value (S),
- the time of travel difference (dt+T) measured with test value (S2) is compared directly or indirectly with the time of travel difference (dt) obtained with the specified preferred value (S), and
- the specified preferred value (S) of the first threshold voltage is retained if nearly the same time of travel difference is measured with the test value (S2) as with the specified preferred value (S), and a new preferred value is specified for the first threshold voltage if the time of travel differences measured with the specified preferred value (S) and with the test value (S2) differ from one another by about the duration of at least one oscillation.

2. Method according to Claim 1, **characterised in that**

- the new preferred value is shifted downwards relative to the previously specified preferred value if the test value with a time of travel difference of about the duration of one oscillation was above the previously specified preferred value, and upwards if the test value was below the previously specified preferred value.

3. Method according to Claim 2, **characterised in that**

- shifts of the preferred value carried out due to divergences between the time of travel differences as measured with a test value and with the preferred value are as close as possible to the amount of separation between the test value and the preferred value.

4. Method according to Claim 3, **characterised in that**

- cyclical test values (P1 to P6) with increasing separation from the preferred value (Vn) are set alternately above and below this preferred value until a time of travel difference (dt+T) measured with a test value (P6) deviates by about the duration (T) of at least one oscillation from the time of travel difference (dt) measured with the previous test value (P5) or the time of travel difference (dt) measured with the previous preferred value (Vn), and a new preferred value (Vn+1) is specified for the subsequent cycle (Zn+1).

5. Method according to Claim 4, **characterised in that**

- in a cycle (Zn) the separation between the test values (P1 to P6) and the preferred value (Vn) is increased in equal steps, and
- the new preferred value (Vn+1) is obtained from the previous preferred value (Vn) by changing it by one increment.

6. Method according to Claim 1 or 2, **characterised in that**

- the first threshold voltage is set at an upper and lower test value (S1; S2) differing by about the same amount from the specified preferred value (S), and
- relative to the previously specified preferred value the new preferred value is shifted towards the value of the direct component of the received signal if the time of travel differences with the two test values (S1; S2) deviate by about the duration (T) of at least one oscillation from the time of travel difference (dt) measured with the previous preferred value (S).

7. Method according to Claim 6, **characterised in that**

- the two test values (S1; S2) amount to five quarters or three quarters of the preferred value (S) relative to the direct component of the received signal.

8. Method according to Claim 6, **characterised in that**

- the two test values (S1; S2) are located one quarter of the separation between the detected and the previous oscillation of the received signal above or below the preferred value (S).

9. Method according to one of the preceding Claims, **characterised in that**

- in an initialisation phase the maximum for the envelopes of the oscillation group is determined and the preferred value (S) is set at half the maximum.

10. Method according to Claims 1 to 8, **characterised in that**

- in an initialisation phase a series of time of travel measurements are carried out, such that the first threshold voltage is varied over a range including at least some peak values from the oscillations in a group,
- the frequency plot (H) of the measured times of travel is determined and weighted with a function (g(t1)) in such a way that frequencies with lower times of travel are amplified relative to those with higher times of travel, and

- the value specified as the preferred value is the middle value from the range of the first threshold voltage which produces the highest weighted frequency of measured time of travel values.

11. Device for measuring the difference in time of travel of audio signals with mutually opposite signal alignments,

   - with two transducers (4, 5) of a flow meter arranged at a distance from one another and able to be operated alternately as a transmitter or as a receiver, such that the signal (10) radiated by the transmitter (4) reaches the receiver (5) as a wave group rising and falling again over several oscillations,
   - with a first comparator (14) for comparing the received signal with a first specifiable threshold voltage,
   - with a second comparator (15) for comparing the received signal with a second threshold voltage close to its direct component,
   - with means of measuring time of travel in a signal alignment, such that when the switching of the first comparator is followed by the switching of the second comparator the time of travel measurement is stopped, and
   - with means (1) of calculating the difference between two time of travel measurements,

   **characterised in that**

   - means (1, DAC) exist for setting the first threshold voltage to at least one test value (S2) lying above and/or below a specified preferred value (S), for comparing the time of travel difference (dt+T) measured with test value (S2) directly or indirectly with the time of travel difference (dt) obtained with the specified preferred value (S), and for retaining the specified preferred value (S) of the first threshold voltage if nearly the same time of travel difference is measured with the test value (S2) as with the specified preferred value (S), and for specifying a new preferred value for the first threshold voltage if the time of travel differences measured with the specified preferred value (S) and with the test value (S2) differ from one another by about the duration of at least one oscillation.

**Revendications**

1. Procédé pour la mesure de la différence de temps de propagation de signaux acoustiques avec des sens de propagation de signal opposés l'un à l'autre entre deux transformateurs (4, 5) d'un dispositif de mesure de flux, lesquels transformateurs sont placés à distance l'un de l'autre et sont exploités en alternance comme émetteur (4) ou comme récepteur (5), le signal (10) émis par l'émetteur atteignant le récepteur en tant que groupe d'ondes croissant et à nouveau décroissant sur plusieurs oscillations et le signal reçu étant comparé par un premier comparateur (14) à une première tension de seuil et par un deuxième comparateur (15) à une deuxième tension de seuil proche de la composante continue dudit signal reçu et une mesure de temps de propagation d'un sens de propagation de signal étant arrêtée lors d'une commutation du deuxième comparateur faisant suite à une commutation du premier comparateur et la différence de deux mesures de temps de propagation étant calculée,
   **caractérisé par le fait que**

   - on règle la première tension de seuil sur au moins une valeur de contrôle (S2) située au-dessus et/ou au-dessous d'une valeur préférée (S) prédéterminée,
   - on compare la différence de temps de propagation (dt + T) mesurée pour la valeur de contrôle (S2) directement ou indirectement à celle (dt) mesurée pour la valeur préférée (S) prédéterminée, et
   - on conserve la valeur préférée (S) prédéterminée de la première tension de seuil si on a mesuré pour la valeur de contrôle (S2) sensiblement la même différence de temps de propagation que pour la valeur préférée (S) prédéterminée et on prescrit une nouvelle valeur préférée pour la première tension de seuil si la différence de temps de propagation mesurée pour la valeur préférée (S) prédéterminée et la différence de temps de propagation mesurée pour la valeur de contrôle (S2) s'écartent l'une de l'autre d'un écart sensiblement égal à la durée au moins d'une oscillation.

2. Procédé selon la revendication 1, **caractérisé par le fait qu'**on décale vers le bas la nouvelle valeur préférée par rapport à la valeur préférée prédéterminée jusqu'alors si la valeur de contrôle avec une différence de temps de propagation s'écartant avec un écart sensiblement égal à la durée T d'une oscillation se trouvait au-dessus de la valeur préférée prédéterminée jusqu'alors et qu'on décale vers le haut si la valeur de contrôle se trouvait au-dessous de la valeur préférée prédéterminée jusqu'alors.

3. Procédé selon la revendication 2, **caractérisé par le fait que** des décalages de la valeur préférée qui sont effectués en raison d'écarts des différences de temps de propagation mesurées pour une valeur de contrôle et pour la valeur préférée sont égaux au maximum, en valeur absolue, à la distance entre la valeur de contrôle et la valeur préférée.

**4.** Procédé selon la revendication 3, **caractérisé par le fait qu'**on règle de façon cyclique des valeurs de contrôle (P1 à P6) avec un écart croissant par rapport à la valeur préférée (Vn) en alternance au-dessus et au-dessous de celle-ci jusqu'à ce qu'une différence de temps de propagation (dt + T) mesurée pour une valeur de contrôle (P6) s'écarte de celle (dt) mesurée pour la valeur de contrôle précédente (P5) ou de celle (dt) mesurée pour la valeur préférée prédéterminée jusqu'alors (Vn) d'un écart sensiblement égal à la durée (T) au moins d'une oscillation et qu'une nouvelle valeur préférée (Vn + 1) soit prescrite pour un cycle suivant (Zn + 1).

**5.** Procédé selon la revendication 4, **caractérisé par le fait que**

- dans un cycle (Zn), on augmente suivant des pas équidistants la distance des valeurs de contrôle (P1 à P6) à la valeur préférée (Vn), et
- on obtient la nouvelle valeur préférée (Vn + 1) à partir de celle prédéterminée jusqu'alors (Vn) par une modification égale à une largeur de pas.

**6.** Procédé selon la revendication 1 ou 2, **caractérisé par le fait que**

- on règle la première tension de seuil sur une valeur de contrôle supérieure et une valeur de contrôle inférieure (S1 ; S2) qui s'écartent de la valeur préférée prédéterminée (S) à chaque fois d'un écart sensiblement égal à la même valeur, et
- on décale la nouvelle valeur préférée par rapport à la valeur préférée prédéterminée jusqu'alors en direction de la composante continue du signal reçu si les différences de temps de propagation pour les deux valeurs de contrôle (S1 ; S2) s'écartent de celle (dt) mesurée pour la valeur préférée prédéterminée jusqu'alors (S) d'un écart sensiblement égal à la durée (T) au moins d'une oscillation.

**7.** Procédé selon la revendication 6, **caractérisé par le fait que** les deux valeurs de contrôle (S1 ; S2), par rapport à la composante continue du signal reçu, valent respectivement cinq quarts et trois quarts de la valeur préférée (S).

**8.** Procédé selon la revendication 6, **caractérisé par le fait que** les deux valeurs de contrôle (S1 ; S2) se trouvent d'un quart de la distance entre l'oscillation détectée et l'oscillation précédente du signal reçu au-dessus ou au-dessous de la valeur préférée (S).

**9.** Procédé selon l'une des revendications précédentes, **caractérisé par le fait que**, dans une phase d'initialisation, on détermine le maximum des enveloppantes du groupe d'oscillations et on règle la valeur préférée (S) sur la moitié du maximum.

**10.** Procédé selon l'une des revendications 1 à 8, **caractérisé par le fait que**

- dans une phase d'initialisation, on effectue une série de mesures de temps de propagation, la première tension de seuil variant dans une plage comprenant au moins quelques valeurs de pointe des oscillations d'un groupe,
- on détermine l'allure de fréquence (H) des temps de propagation mesurés et on l'estime avec une fonction de pondération (g (t1)) de telle sorte que des fréquences avec de petits temps de propagation sont amplifiées par rapport à celles avec de plus grands temps de propagation, et
- on prescrit comme valeur préférée la valeur moyenne de la plage de la première tension de seuil qui donne la plus grande fréquence pondérée de valeurs mesurées de temps de propagation.

**11.** Dispositif pour la mesure de la différence de temps de propagation de signaux acoustiques avec des sens de propagation de signal opposés l'un à l'autre,

- avec deux transformateurs (4, 5) d'un dispositif de mesure de flux, lesquels transformateurs sont placés à distance l'un de l'autre et sont exploités en alternance comme émetteur ou comme récepteur, le signal (10) émis par l'émetteur (4) atteignant le récepteur (5) en tant que groupe d'ondes croissant et à nouveau décroissant sur plusieurs oscillations,
- avec un premier comparateur (14) pour comparer le signal reçu à une première tension de seuil pouvant être prescrite,
- avec un deuxième comparateur (15) pour comparer le signal reçu à une deuxième tension de seuil proche de la composante continue dudit signal reçu,
- avec des moyens pour mesurer le temps de propagation dans un sens de propagation de signal, la mesure de temps de propagation étant arrêtée lors d'une commutation du deuxième comparateur faisant suite à une commutation du premier comparateur, et
- avec des moyens (1) pour calculer la différence entre deux mesures de temps de propagation,

**caractérisé par le fait qu'**il est prévu des moyens (1, DAC) pour régler la première tension de seuil sur au moins une valeur de contrôle (S2) située au-dessus et/ou au-dessous d'une valeur préférée prédéterminée (S), pour comparer la différence de temps de propagation (dt + T) mesurée pour la valeur de contrôle (S2) directement ou indirectement à celle (dt) mesurée pour la valeur préférée prédéterminée (S) et pour conserver la valeur préférée prédéterminée (S) de la première tension de seuil si on a mesuré pour la valeur de contrôle (S2) sensiblement la même différence de temps de propagation que pour la valeur préférée prédéterminée (S) et pour prescrire une nouvelle valeur préférée pour la première tension de seuil si la différence de temps de propagation mesurée pour la valeur préférée prédéterminée (S) et la différence de temps de propagation mesurée pour la valeur de contrôle (S2) s'écartent l'une de l'autre d'un écart sensiblement égal à la durée (T) au moins d'une oscillation.

FIG 1

FIG 2

FIG 3

FIG 4

FIG 5